# EUROPÄISCHE PATENTANMELDUNG

(11) **EP 1 900 613 A1**
(43) Veröffentlichungstag der Anmeldung: **19.03.2008**
(21) Anmeldenummer: 06019277.0
(22) Anmeldetag: 14.09.2006
(51) Int. Cl.: B62D 21/14, B62D 53/06

(54) **Anpassbarer Auflageträger**

(71) Anmelder: SIEMENS AKTIENGESELLSCHAFT, 80333 München (DE)
(72) Erfinder: Emmerich, Swen, 47893 Krefeld (DE); Linder, Josef, 45326 Essen (DE); Spoormaker, Hans, 47055 Duisburg (DE); an der Heiden, Horst, 47058 Duisburg (DE)

(57) **Zusammenfassung**

Die Erfindung betrifft einen Auflageträger (1), der ein Basisteil (2) aufweist, das mit einer Auflageseite (4) auf eine Ladefläche eines Transportfahrzeugs auflegbar ist. Dem Basisteil (2) ist zumindest ein Trägerelement (3) zugeordnet, das in Längsrichtung des Basisteils (2) relativ zu diesem aus einer Ruheposition in eine Gebrauchsposition bewegbar ist, und zumindest in der Gebrauchsposition festlegbar ist.

Damit wird ein teleskopierbarer Auflageträger (1) zur Verfügung gestellt, der äußerst flexibel an jeweils unterschiedliche Transportaufgaben anpassbar ist.

## Beschreibung

Die Erfindung betrifft einen Auflageträger, der ein Basisteil aufweist, das mit einer Auflageseite auf eine Ladefläche eines Transportfahrzeugs auflegbar ist.

Derartige Auflageträger werden beispielsweise auf die Ladefläche von Transportfahrzeugen zum Beispiel von Sattelschleppern aufgelegt, um ein zu transportierendes Gut im Straßenverkehr oder dergleichen transportieren zu können. Bei einigen dieser Transportaufgaben zeigt es sich, dass das zu transportierende Gut über die eigentliche Ladefläche des Transportfahrzeuges zumindest seitlich übersteht, so dass die Auflageträger dem zu transportierenden Gut eine an seine Dimensionen angepasste verbreiterte Ladefläche, bezogen auf die eigentliche Ladefläche des Transportfahrzeuges zur Verfügung stellen. Damit können unter der Voraussetzung, dass Sondergenehmigungen seitens der zuständigen Behörden vorliegen, auch Güter beispielsweise über das Straßennetz transportiert werden, die eigentlich breiter sind als eine Fahrspur der Straße selbst.

Als ein Hauptnachteil der bekannten Auflageträger ist anzusehen, dass diese besonders schwer und unhandlich sind und/oder den wachsenden Belastungen bzw. Gewichtskräften der zu transportierenden Güter nicht mehr standhalten können. Bekannt ist beispielsweise als Auflageträger so genannte IPB-Stahlträger einzusetzen, die zwar den erheblichen Gewichtskräften beispielsweise von Gussgehäusen von Strömungsmaschinen oder dergleichen standhalten können, gleichwohl aber auf eine bestimmte Länge hergestellt und/oder gekürzt werden müssen, wobei die beispielhaft genannten IPB-Stahlträger sehr schwer sind, und somit sehr unhandlich, wobei ein manuelles Auflegen auf die Ladefläche nicht möglich ist. Gleichzeitig belastet die Gewichtskraft des beispielhaft genannten IPB-Stahlträgers natürlich auch das Transportfahrzeug selbst, so dass dieses aufgrund der zusätzlichen Gewichtskraft der beispielhaft genannten IPB-Stahlträger nicht die mögliche zulässige Gesamtzuladung aufnehmen kann.

Bekannt ist aber auch, dass derart große bzw. schwere Güter mittels Holzkonstruktionen oder Holzträgern auf der Ladefläche des Transportfahrzeuges transportiert werden, wobei die Holzträger im Vergleich zu den zuvor genannten Stahlträgern zwar relativ leicht sind, aber möglicherweise den aufliegenden Gewichtskräften nicht standhalten.

Von daher liegt der Erfindung die Aufgabe zugrunde, einen Auflageträger der Eingangs genannten Art mit einfachen Mitteln dahingehend zu verbessern, dass die vorgenannten Nachteile vermieden werden, wobei der Auflageträger leicht und kostengünstig montiert bzw. demontiert werden kann und an die jeweilige Transportaufgabe anpassbar ist.

Erfindungsgemäß wird die Aufgabe dadurch gelöst, dass dem Basisteil zumindest ein Trägerelement zugeordnet ist, das in Längsrichtung des Basisteils relativ zu diesem aus einer Ruheposition in eine Gebrauchsposition bewegbar und zumindest in der Gebrauchsposition festlegbar ist.

Zweckmäßig im Sinne der Erfindung ist, dass das zumindest eine Trägerelement in dem Basisteil aufgenommen ist, so dass ein teleskopartiger Auflageträger gebildet ist.

Günstig im Sinne der Erfindung ist, wenn dem Basisteil bevorzugt zwei gleich dimensionierte Trägerelemente zugeordnet sind, wobei die beiden Trägerelemente bezogen auf das Basisteil relativ zu diesem in jeweils entgegen gesetzter Richtung bewegbar sind.

Durch die teleskopartige Ausgestaltung des Auflageträgers kann dieser einfachst an die jeweilige Transportaufgabe angepasst werden, in dem das Basisteil auf die Auflagefläche aufgesetzt bzw. aufgelegt wird, wobei das bzw. die Trägerelemente dann einfach aus dem Basisteil herausgezogen wird bzw. werden, bis die erforderliche Länge bzw. Seitenverbreiterung der eigentlichen Ladefläche des Transportfahrzeuges erreicht ist, um das zu transportierende Gut sicher lagern bzw. transportieren zu können.

Damit das Trägerelement in der jeweils erforderlichen Gebrauchsposition lagesicher fixiert ist, ist es günstig im Sinne der Erfindung, dass das Trägerelement kraftschlüssig an dem Basisteil festlegbar ist. Hierzu können beispielsweise geeignete Steckvorrichtungen vorgesehen werden, die entsprechende zueinander fluchtende Bohrungen, die sowohl in dem Basisteil als auch in dem Trägerelement angeordnet sind, durchgreifen und hinreichend gesichert werden können.

Vorteilhaft im Sinne der Erfindung ist, wenn das Basisteil als hohles Vierkantrohr ausgeführt ist, wodurch das Basisteil bzw. der gesamte Auflageträger im Vergleich zu Vollmaterial sehr leicht wird und gleichzeitig den anstehenden Belastungen standhalten kann.

Damit das Basisteil bzw. der Auflageträger hinreichend lagesicher auf der Auflagefläche des Transportfahrzeuges befestigt werden kann, ist es günstig im Sinne der Erfindung, dass das Basisteil jeweils endseitig Anschlagvorrichtungen aufweist, die jeweils an gegenüberliegenden Seitenwänden angeordnet sind, wobei die Anschlagvorrichtung in der Nähe der Auflageseite angeordnet sind. Vorteilhaft im Sinne der Erfindung ist, wenn die Anschlagvorrichtungen aus einem Rundstahl gebildet sind, und einen ersten gebogenen Abschnitt aufweisen, der in einen im wesentlichen gradlinig verlaufenden zweiten Abschnitt übergeht, wobei sich der gebogene Abschnitt von der Seitenwand weg erstreckt, und wobei der gradlinig verlaufende Abschnitt mit seinem freien Ende zur Seitenwand hin orientiert ist. Somit bilden die Anschlagvorrichtungen quasi Ösen, wobei die Anschlagvorrichtungen aufgrund ihres vertikalen Abstands zur Auflageseite des Basisteils natürlich auch zur Auflagefläche bzw. Ladefläche des Transportfahrzeugs beanstandet sind, so dass hier leicht beispielsweise Verzurrgurte oder dergleichen Anschlagmittel durch die durch die Anschlagvorrichtungen gebildeten Ösen mit der Ladefläche an hierzu angeordneten, geeigneten Vorrichtungen befestigbar bzw. verzurrbar sind.

Damit das Trägerelement in seiner Ruheposition vollständig in dem Basisteil aufgenommen werden kann, ist es günstig im Sinne der Erfindung, dass das Basisteil an seiner zur Auflageseite gegenüberliegenden Trägerseite jeweils endseitig eine erste Ausnehmung aufweist, zu der in Längsrichtung gesehen eine zweite Ausnehmung beanstandet angeordnet ist. Hierbei ist die erste Ausnehmung vorteilhaft als quasi viereckige Ausnehmung bzw. Öffnung von der Stirnseite des Basisteils in Richtung zu seiner Mitte hin eingebracht, welche ein Erhöhungselement aufnehmen kann, welches auf dem Trägerelement angeordnet ist. Auf die Vorteile des Erhöhungselementes wird weiter unten näher eingegangen. Die darauf folgende zweite Ausnehmung ist bevorzugt als kreisrunde Öffnung in der Trägerseite eingebracht, um beispielsweise Schmiermittel zuführen zu können, welches die relative Bewegbarkeit des Trägerelementes zum Basisteil erleichtert, so dass die zweite Ausnehmung auch einfach als Schmieröffnung bezeichnet werden kann. Gleichzeitig dient die zweite Ausnehmung aber auch als Montageöffnung, um notwendige Bauteile an dem in dem Basisteil aufgenommenen Trägerelement montieren bzw. demontieren zu können.

Um zu vermeiden, dass sich das Trägerelement im Inneren des Basisteils bei seiner relativen Bewegung zu dem Basisteil verkantet, ist es günstig im Sinne der Erfindung, wenn dem Basisteil in seinem Inneren im Bereich der ersten Ausnehmung und gegenüberliegend zu dieser ein Gleitelement zugeordnet ist, welches an der Auflageseite angeordnet ist, wobei in Längsrichtung gesehen zueinander beabstandete Entwässerungsbohrungen in der Auflageseite vorgesehen sind.

Um das Trägerelement in seiner Gebrauchsposition und/oder in seiner Ruheposition an dem Basisteil kraftschlüssig fest zu legen, sind, wie bereits oben gesagt, Bohrungen vorgesehen, die in bevorzugter Ausgestaltung jeweils endseitig in den Seitenwänden des Basisteils angeordnet sind. Im Bereich der Bohrungen sind Verstärkungselemente im Inneren des Basisteils angeordnet, die natürlich zu den Bohrungen in dem Basisteil korrespondierende Durchbrechungen aufweisen. Die Verstärkungselemente dienen gleichzeitig als Führungs- bzw. Zentrierelemente für die Steckvorrichtungen, die dadurch leichter durch die zu einander fluchtenden Bohrungen gesteckt werden können.

Bevorzugter Weise sind die Bohrungen in den jeweiligen Seitenwänden in Vertikalrichtung gesehen zueinander beanstandet und übereinander angeordnet.

Um weiter Gewicht zu sparen und auch vorteilhaft die Steckvorrichtungen durch das Basisteil und durch das Trägerelement stecken zu können, ist es zweckmäßig, wenn das Trägerelement als hohles Vierkantrohr mit einander gegenüberliegenden Querwänden und Längswänden ausgeführt ist, wobei in den Seitenwänden zwei vertikal zueinander beabstandete Reihen mit Bohrungen eingebracht sind, und wobei die Bohrungen der jeweiligen Reihe zur anderen Reihe in Längsrichtung des Trägerelementes versetzt sind. Die Bohrungen der jeweiligen Reihe, bzw. die beiden in Vertikalrichtung übereinander angeordneten Reihen, weisen vorteilhaft denselben vertikalen Abstand auf, wie die Bohrungen in den jeweiligen Endseiten des Basisteils.

Durch diese vorteilhafte Ausgestaltung der zueinander axial bzw. in Längsrichtung versetzten Bohrungen der jeweiligen Reihe wird quasi ein stufenlos verstellbarer Teleskopträger zur Verfügung gestellt, so dass das Trägerelement leicht an jede Transportaufgabe anpassbar ist. Natürlich weisen die Bohrungen der beiden Reihen einen gewissen Abstand zueinander auf, wobei aber dennoch von einer quasi stufenlosen Einstellbarkeit gesprochen werden kann, obwohl kleine Stufen in Längsrichtung gesehen vorhanden sind.

Denkbar ist natürlich anstelle der zueinander beabstandeten Bohrungen der jeweiligen Reihe, einen Schlitz bzw. eine Art Kulissenführung vorzusehen, wobei das Trägerelement dann mit geeigneten Festlegelementen an dem Basisteil in der jeweils gewünschten Gebrauchsposition bzw. in der Ruheposition festlegbar ist.

Zweckmäßig im Sinne der Erfindung ist, dass das Trägerelement ein freies Ende und ein dazu gegenüberliegendes Kopfende aufweist, wobei an dem Kopfende ein Kopfteil angeordnet ist.

In bevorzugter Ausgestaltung ist das Kopfteil aus einem U-förmigen Element mit zwei U-Schenkeln und einem Basisschenkel gebildet, wobei jeweils an Außenseiten der U-Schenkel und an der Innenseite des Basisschenkels ein Zugelement angeordnet ist, wobei eine zur Innenseite des Basisschenkels gegenüberliegende Außenseite mit dem Kopfende verbunden ist, und wobei die Zugelemente bewegbar gelagert sind.

Die Zugelemente weisen hierbei vorteilhaft eine Doppelfunktion auf, wobei an den Zugelementen gezogen werden kann, um das Trägerelement aus dem Basisteil in die gewünschte Gebrauchsposition und wieder zurück zu überführen bzw. zu ziehen oder zu drücken, wobei die Zugelemente nach Festlegung bzw. kraftschlüssiger Festlegung des Trägerelementes an dem Basisteil zur weiteren Lagesicherung dienen können, in dem eine Bedienperson Verzurrgurte oder dergleichen Anschlagmittel durch die Zugelemente führt und bevorzugt an Seitenflächen des Transportfahrzeuges befestigt. Mit dem an dem Basisschenkel angeordneten Zugelement kann auch das zu transportierende Gut noch lagesicher festgelegt werden, was natürlich auch für die an den U-Schenkeln angeordneten Zugelementen entsprechend möglich ist.

Damit das zu transportierende Gut möglichst in einer Ebene auf dem Auflageträger gelagert werden kann, ist es günstig im Sinne der Erfindung, wenn das Trägerelement an seinem Kopfende das o.g. Erhöhungselement aufweist, das an einer Längswand des Trägerelementes, bevorzugt der Trägerseite des Basisteils zugeordneten Längswand angeordnet ist. Das Erhöhungselement ist an die erste Ausnehmung in dem Basisteil angepasst, so dass sich das Trägerelement mit seinem Erhöhungselement in der Ruheposition vollständig in das Basisteil einfahren lässt, wobei die Trägerseite des Basisteils bündig mit der Oberfläche des Erhöhungselementes abschließt. Hierdurch wird gleichzeitig sicher gestellt, dass das zu transportierende Gut in der Gebrauchsposition des Trägerelementes auf dem Erhöhungselement gelagert wird, welches das gleiche Oberflächenniveau aufweist wie das Basisteil, womit eine schiefe Lagerung des zu transportierenden Gutes erfolgreich vermieden ist.

Zur Führung bei der relativen Bewegung des Trägerelementes zum Basisteil ist vorteilhaft vorgesehen, dass das Trägerelement an seinem freien Ende zwei übereinander liegende Bohrungen aufweist, die in seinen Querwänden angeordnet sind, und dass das Trägerelement an seinen freien Enden ein Anschlagblech aufweist, das am Äußeren des Trägerelementes an einer seiner Längswände, bevorzugt der Auflageseite des Basisteils zugeordneten Längswand angeordnet ist. In die übereinander liegenden Bohrungen können beispielsweise Verbindungselemente eingeführt werden, die ein Führungsblech mit dem Trägerelement verbinden, welches in seinen Dimensionen an einen Abstand des Äußeren des Trägerelementes zum Inneren des Basisteils angepasst ist. Um zu vermeiden, dass das Trägerelement aus dem Basisteil herausgezogen wird, ist günstiger Weise das Anschlagblech vorgesehen, welches mit dem am Basisteil angeordneten Gleitelement zusammenwirkt, in dem das Anschlagblech an einer Kante des Gleitelementes anschlägt. Diese Bauteile können nachträglich an dem Trägerelement montiert werden, wozu sich besonders die zweite Ausnehmung als Montageöffnung in dem Basisteil eignet.

Insgesamt wird damit ein autarker Auflageträger zur Verfügung gestellt, der sich durch einen äußerst geringen Schulungsbedarf hinsichtlich der Handhabung auszeichnet. Vorteilhaft ist weiter seine mobile Anwendbarkeit und seine leichte und kostengünstige Montage sowie Demontage, wobei der Auflageträger äußerst einfach zu transportieren ist. Durch die quasi stufenlose Verstellbarkeit des Trägerelementes zum Basisteil ist das Trägerelement flexibel einsetzbar, was bedeutet, dass das Trägerelement an unterschiedliche Transportaufgaben angepasst werden kann. Vorteilhaft ist weiter, dass der Auflageträger lediglich mechanisch bedienbar ist, wodurch kein zusätzlicher Energieverbrauch bzw. eine gesonderte Zuführung von Energie und damit keine zusätzlichen Energiekosten anfallen. Weiter ist der Auflageträger durch seinen modulartigen Aufbau entsprechend vielseitig einsetzbar, wobei durch die besonders leichte Handhabung ein Gefährdungspotential von Bedienern und eine Beschädigungsgefahr der zu transportierenden Güter bzw. Werkstücke vorteilhaft vermieden ist. Durch die vorteilhafte Ausgestaltung des Auflageträgers wird weiter die Transportsicherheit, insbesondere im Straßenverkehr, optimiert.

Natürlich können mehrere Auflageträger auf die Ladefläche des Transportfahrzeugs aufgelegt werden, die in Längsrichtung der Ladefläche zueinander beabstandet sind. Zwischen den jeweiligen Auflageträgern kann noch eine Art Podest angeordnet werden, um eine, zur eigentlichen Ladefläche erhöhte Ladefläche mit einem einzigen Höhenniveau zu erreichen.

Der erfindungsgemäße Auflageträger eignet sich insbesondere zum Transport von Großgehäusen.

Weitere vorteilhafte Ausgestaltungen der Erfindung sind in den Unteransprüchen und der folgenden Figurenbeschreibung offenbart. Es zeigen:
- Fig. 1: einen Auflageträger in einer Explosionsdarstellung,
- Fig. 2 - 4: ein Basisteil des Auflageträgers aus Fig. 1 als Einzelheit in verschiedenen Ansichten, und

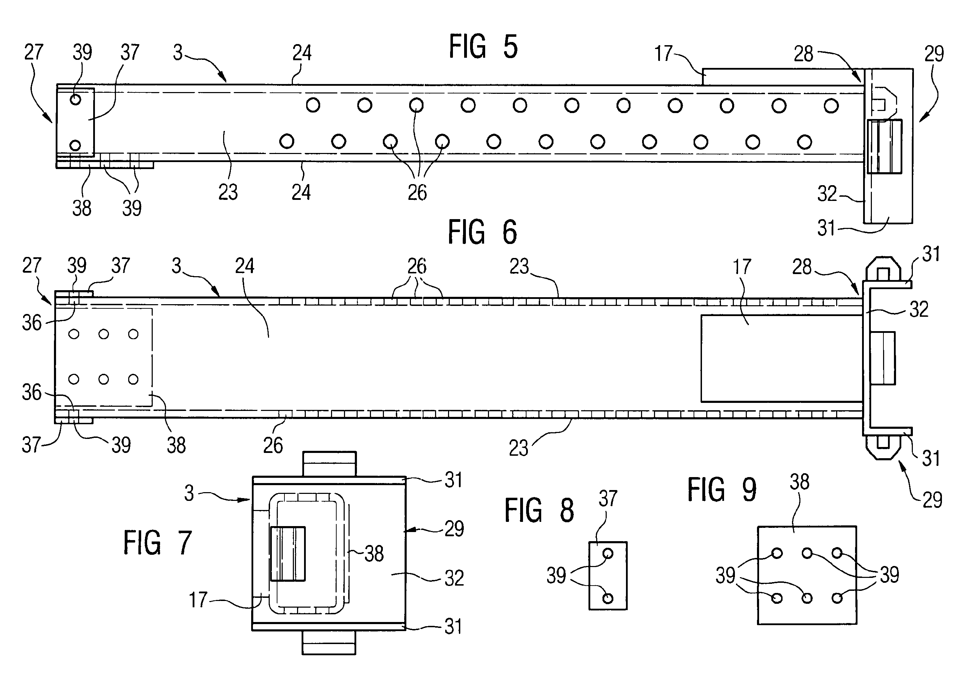

- Fig. 5 - 9: ein Trägerelement des Auflageträgers aus Fig. 1 als Einzelheit in verschiedenen Ansichten.

In den unterschiedlichen Figuren sind gleiche Teile stets mit denselben Bezugszeichen versehen, so dass diese in der Regel auch nur einmal beschrieben werden.

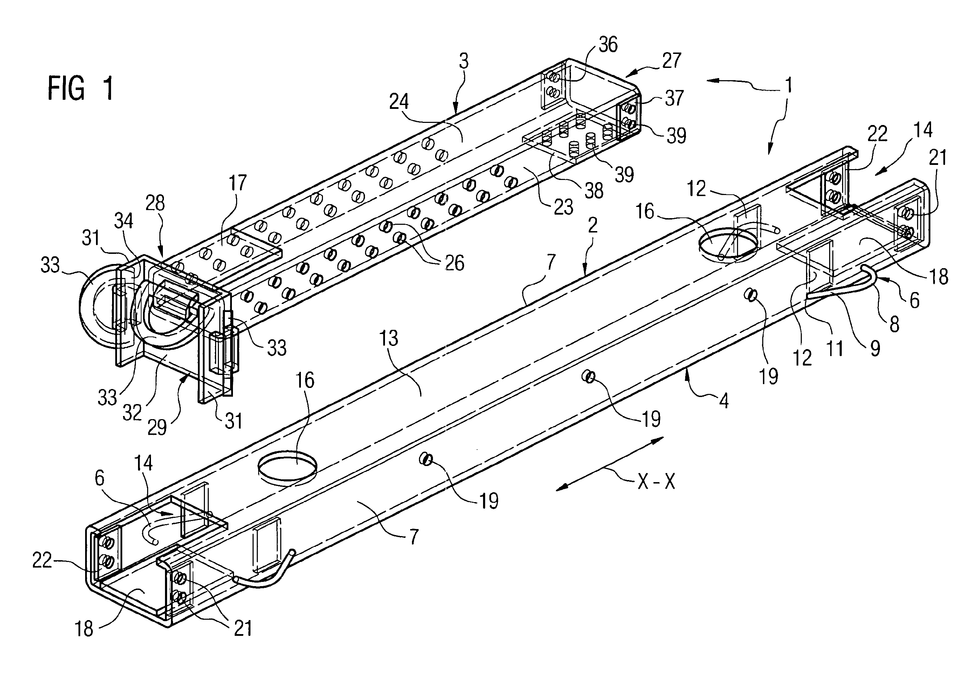

Figur 1 zeigt einen Auflageträger 1 mit einem Basisteil 2 und einem Trägerelement 3. Das Basisteil 2 ist mit einer Auflageseite 4 auf eine nicht dargestellte Ladefläche eines Transportfahrzeuges auflegbar. In dem in Figur 1 dargestellten Ausführungsbeispiel ist dem Basisteil 2 zumindest ein Trägerelement 3 zugeordnet, das in Längsrichtung X-X des Basisteils 2 relativ zu diesem aus einer Ruheposition in eine Gebrauchsposition bewegbar und zumindest in der Gebrauchsposition festlegbar ist.

Das zumindest eine Trägerelement 3 ist in dem Basisteil 2 verschiebbar aufnehmbar, so dass ein teleskopartiger Auflageträger 1 gebildet ist. Dem Basisteil 2 sind zwei gleich dimensionierte Trägerelemente 3 zugeordnet, wobei die beiden Trägerelemente 3, bezogen auf das Basisteil 2, relativ zu diesem in jeweils entgegen gesetzter Richtung bewegbar sind.

Das Basisteil 2 ist in dem dargestellten Ausführungsbeispiel als hohles Vierkantrohr ausgeführt. Jeweils endseitig weist das Basisteil 2 Anschlagvorrichtungen 6 auf, die jeweils an gegenüberliegenden Seitenwänden 7 angeordnet sind, wobei die Anschlagvorrichtungen 6 in der Nähe der Auflageseite 4 angeordnet sind. Die Anschlagvorrichtungen 6 dienen zum einen dazu, den Auflageträger 1 zu transportieren und zum anderen dazu, den Auflageträger 1 auf der Ladefläche des Transportfahrzeuges hinreichend fest zu lagern.

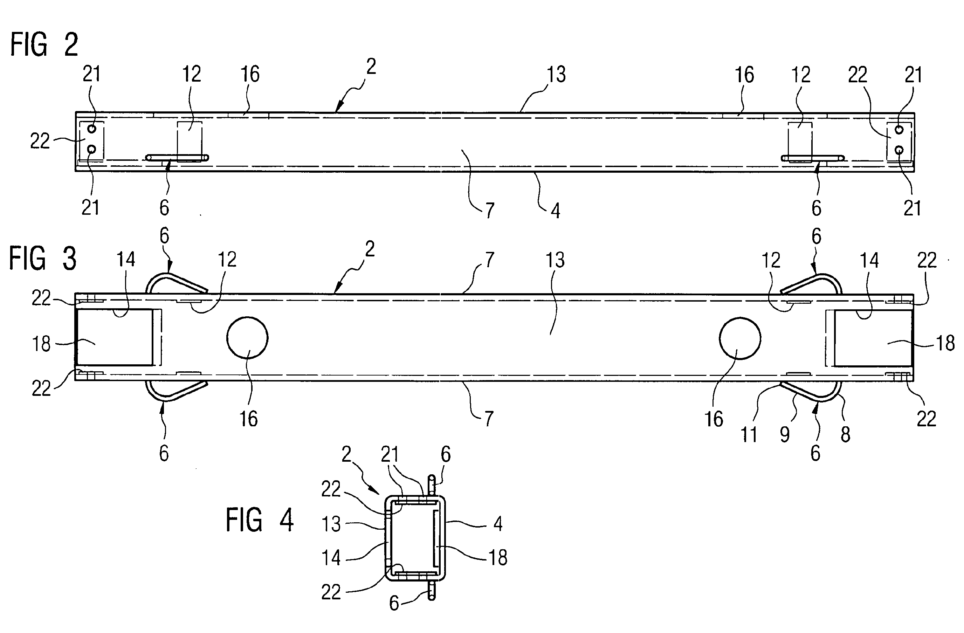

Die Anschlagvorrichtungen 6 sind in dem dargestellten Ausführungsbeispiel aus einem Rundstahl gebildet und weisen einen ersten gebogenen Abschnitt 8 auf, der in einen im wesentlichen geradlinig verlaufenden zweiten Abschnitt 9 übergeht, wobei sich der gebogene Bereich bzw. Abschnitt 8 von der Seitenwand 7 weg erstreckt, und wobei der geradlinig verlaufende Bereich bzw. Abschnitt 9 mit seinem freien Ende 11 zur Seitenwand 7 hin orientiert ist. Damit wird quasi eine ösenartige Anschlagvorrichtung 6 zur Verfügung gestellt. Im Bereich des freien Endes 11 ist im Inneren des Basisteils 2 ein Verstärkungsblech 12 angeordnet (Figuren 2 - 4).

Der Figur 1 ist weiter zu entnehmen, dass das Basisteil 2 an seiner zur Auflageseite 4 gegenüberliegenden Trägerseite 13 jeweils endseitig bzw. stirnseitig eine erste Ausnehmung 14 aufweist, zu der in Längsrichtung X-X gesehen eine zweite Ausnehmung 16 beanstandet angeordnet ist.

Die erste Ausnehmung 14 ist in dem dargestellten Ausführungsbeispiel als viereckige Öffnung ausgeführt, die mit einem Erhebungselement 17, welches auf dem Trägerelement 3 angeordnet ist, zusammenwirkt, worauf weiter unten näher eingegangen wird. Die zweite Ausnehmung 16 ist in dem dargestellten Ausführungsbeispiel als kreisrunde Öffnung in der Trägerseite 13 angeordnet und dient unter anderem dazu, Schmiermittel dem Auflageträger 1 bzw. dem in dem Basisteil 2 aufgenommenen Trägerelement 3 zuzuführen. Von daher kann die zweite Ausnehmung 16 auch als Schmieröffnung bezeichnet werden. Weiter kann die zweite Ausnehmung 16 als Montageöffnung benutzt werden, um Bauteile an das in dem Basisteil 2 aufgenommenen Trägerelement 3 zu montieren bzw. zu demontieren.

Dem Basisteil 2 ist seinem Inneren im Bereich der ersten Ausnehmung 14 und gegenüberliegend zu dieser ein Gleitelement 18 zugeordnet, welches an der Auflageseite 4 angeordnet ist, wobei in Längsrichtung X-X gesehen zueinander beabstandete Entwässerungsbohrungen 19 in der Auflageseite 4 angeordnet sind. Die Entwässerungsbohrungen 19 dienen unter anderem dazu, das zugefügte Schmiermittel ableiten zu können, wobei die Entwässerungsbohrungen 19 natürlich auch als Wasserablauflöcher bezeichnet werden können, so dass beispielsweise in den Auflageträger 1 eindringendes Niederschlagswasser oder dergleichen hinreichend ablaufen kann.

An seinen Stirnseiten weist das Basisteil 2 in seinen Seitenwänden 7 zumindest zwei Bohrungen 21 auf, wobei den Seitenwänden 7 im Bereich der Bohrungen 21 Verstärkungs- bzw. Zentrierelemente 22 im Inneren des Basisteils 2 zugeordnet sind. Die Bohrungen 21 in den jeweiligen Seitenwänden 4 sind in Hochrichtung bzw. in Vertikalrichtung gesehen zueinander beanstandet und direkt übereinander angeordnet, wobei die einander gegenüberliegenden Bohrungen 21 in den jeweiligen Seitenwänden 7 zueinander fluchten.

Das Trägerelement 3 ist als hohles Vierkantrohr mit einander gegenüber liegenden Querwänden 23 und Längswänden 24 ausgeführt, wobei in den Querwänden 23 zwei vertikal zueinander beabstandete Reihen mit Bohrungen 26 eingebracht sind, wobei die Bohrungen 26 der jeweiligen Reihe zur anderen Reihe in Längsrichtung X-X versetzt sind.

Befindet sich das Trägerelement 3 vollständig in dem Basisteil 2 und soll aus dieser Ruheposition in eine Gebrauchsposition überführt werden, wird das Trägerelement 3 einfach teleskopartig aus dem Basisteil 2 herausgezogen, bis die gewünschte axiale Länge, bzw. Verbreiterung der eigentlichen Ladefläche des Transportfahrzeugs erreicht ist. Durch die in den beiden Reihen angeordneten Bohrungen 26 kann dann, wenn diese mit den Bohrungen 21 in dem Basisteil 2 fluchten, eine Steckvorrichtung geführt werden, die einseitig, z.B. mit einer kopfseitig angeordneten Öse, an einer Außenwand des Basisteils anliegt und anderseitig mit seinem freien Ende aus der dazu gegenüberliegenden Seite des Basisteils 2 herausragt. Das freie Ende kann zusätzlich mit einem Splint bzw. einer Federsplint oder anderen geeigneten Sicherungselementen gesichert werden.

Aufgrund der vorteilhaften Ausgestaltung der Bohrungen 26 in den zueinander vertikal beabstandeten Reihen wird somit eine quasi stufenlose Verlängerung des Auflageträgers 1 erreicht, in dem das Trägerelement 3 einfach aus dem Basisteil 2 herausgezogen wird, bis eine der Bohrungen 26 einer der beiden Reihen mit der Bohrung 21, d.h. entweder einer oberen oder einer unteren Bohrung 21, in dem Basisteil 2 fluchtet. Die Bohrungen 26 einer jeweiligen Reihe weisen im bevorzugten Ausführungsbeispiel einen axialen Abstand von 100 mm auf, wobei durch den axialen Versatz beispielsweise einer unteren Bohrung zur nächstfolgenden oberen Bohrung dann ein Versatz von 50 mm vorliegt.

Bei dem in Figur 1 dargestellten Ausführungsbeispiel weist das Trägerelement 3 ein freies Ende 27 und ein dazu gegenüberliegendes Kopfende 28 auf, wobei an dem Kopfende 28 ein Kopfteil 29 angeordnet ist.

Das Kopfteil 29 besteht aus einem U-förmigen Element mit zwei U-Schenkeln 31 und einem Basisschenkel 32. Jeweils an Außenseiten der U-Schenkel 31 und an einer Innenseite des Basisschenkels 32 ist ein Zugelement 33 angeordnet, wobei eine zur Innenseite des Basisschenkels 32 gegenüberliegende Außenseite mit dem Kopfende 28 des Trägerelementes 3 verbunden ist, und wobei die Zugelemente 33 bewegbar gelagert sind. An den Zugelementen 33 kann das Trägerelement 3 beispielsweise aus dem Basisteil 2 herausgezogen werden und anschließend nach Festlegung in der gewünschten Gebrauchsposition mittels geeigneter Verzurrvorrichtungen hinreichend lagesicher mit dem Transportfahrzeug bzw. mit Seitenelementen der Ladefläche verbunden werden. Die Zugelemente 33 sind hierzu vorteilhaft als Ösenelement ausgeführt, deren Basissteg 34 klappbar gelagert ist, so dass die den U-Schenkel 31 zugeordneten Zugelemente 33 in Längsrichtung X-X gesehen nach vorne und nach hinten geklappt bzw. gedreht werden können, wobei das dem Basisschenkel 32 zugeordnete Zugelement 33 in vertikaler Richtung nach oben und nach unten geklappt bzw. gedreht werden kann. Die Zugelemente 33, insbesondere das an dem Basisschenkel 32 angeordnete Zugelement 33 kann natürlich auch für ein zusätzliches Verzurren des zu transportierenden Gutes benutzt werden.

An seinem Kopfende 28 weist das Trägerelement 3 das oben genannte Erhebungselement 17 auf. Das Erhebungselement 17 ist an die Ausgestaltung der ersten Ausnehmung 14 in dem Basisteil 2 angepasst, so dass das Trägerelement 3 in seiner Ruheposition vollständig in dem Basisteil 2 aufgenommen werden kann, und hier mittels der Steckvorrichtung hinreichend lagesicher festlegbar ist. Eine Oberfläche des Erhebungselementes 17 ist hierbei günstiger Weise bündig zur Oberfläche der Trägerseite 13 des Basisteils 2. Dies ist deshalb günstig, da somit das zu transportierende Gut in einer Ebene gerade abgestellt bzw. transportiert werden kann, da die relevanten Auflageflächen zum einen des Basisteils 2 und zum anderen des Trägerelementes 3, hier insbesondere die Oberfläche des Erhebungselementes 17, auf einem Niveau angeordnet sind.

An seinem freien Ende 27 weist das Trägerelement 3 zwei in Vertikalrichtung gesehen übereinander liegende Bohrungen 36 auf, die in den Querwänden 23 des Trägerelementes 3 angeordnet sind. Durch diese Bohrungen 36 können Schrauben oder dergleichen Verbindungselemente geführt werden, um Führungs- bzw. Zentrierelemente 37 mit Gewindebohrungen 39 an dem freien Ende 27 anzuordnen, die derart an einen Spalt zwischen den jeweils zugeordneten Seitenwänden 7 des Basisteils 2 und den Querwänden 23 des Trägerelementes 3 angepasst sind, so dass quasi eine im wesentlichen spielfreie Führung zur Verfügung gestellt wird. Im Bereich des freien Endes 27 weist das Trägerelement 3 zudem ein außenseitig angeordnetes Anschlagblech 38 mit Gewindebohrungen 39 auf, welches in Zusammenwirken mit dem Gleitelement 18 des Basisteils 2 eine Auszugsicherung darstellt. Damit ist sichergestellt, dass das Trägerelement 3 nur bis zu einer bestimmten Länge aus dem Basisteil 2 herausgezogen werden kann, wobei bei einer maximalen Auszuglänge die Kante des Anschlagbleches 38 an die zugeordnete Kante des Gleitelementes 18 anschlägt, wodurch verhindert wird, dass das Trägerelement 3 aus dem Basisteil 2 herausgezogen wird. Diese Bauteile können nachträglich an dem Trägerelement 3 montiert werden, wozu sich die zweite Ausnehmung in dem Basisteil 2 eignet.

In dem dargestellten, bevorzugten Ausführungsbeispiel weist das Basisteil eine Längserstreckung von 2800 mm auf, wobei das zugeordnete Trägerelement 3 eine Längserstreckung von seinem Kopfende 28 bis zu seinem freien Ende 27 von 1400 mm aufweist. Durch das teleskopartige Verlängern des Auflageträgers 1, in dem das Trägerelement 3 um einen gewünschten Längenbetrag aus dem Basisteil 2 herausgezogen werden kann, wird so vorteilhaft ein sehr flexibler Auflageträger 1 zur Verfügung gestellt, der sich an unterschiedliche Transportaufgaben anpassen kann. Bevorzugt ist beispielsweise, dass die dem Basisteil 2 zugeordneten beiden Trägerelemente 3 jeweils um einen gleichen Längenbetrag aus dem Basisteil 2 herausgezogen werden, wobei aber auch selbstverständlich ein ungleicher Längenbetrag des jeweiligen Trägerelementes 3 durchaus denkbar ist, je nachdem welche Transportaufgabe gelöst werden soll.

### Bezugszeichenliste

- 1.: Auflageträger
- 2.: Basisteil
- 3.: Trägerelement
- 4.: Auflageseite
- 6.: Anschlagvorrichtung
- 7.: Seitenwand v. 2
- 8.: gebogener Abschnitt v. 6
- 9.: geradliniger Abschnitt v. 6
- 11.: freies Ende v. 6
- 12.: Verstärkungsblech
- 13.: Trägerseite
- 14.: erste Ausnehmung
- 16.: zweite Ausnehmung
- 17.: Erhebungselement
- 18.: Gleitelement
- 19.: Entwässerungsbohrungen
- 21.: Bohrungen in 2
- 22.: Zentrierelement
- 23.: Querwand v. 3
- 24.: Längswand v. 3
- 26.: Bohrungen in 3
- 27.: freies Ende v. 3
- 28.: Kopfende v. 3
- 29.: Kopfteil
- 31.: U-Schenkel
- 32.: Basisschenkel
- 33.: Zugelement
- 34.: Basissteg v. 33
- 36.: Bohrungen in 27 v. 3
- 37.: Führungselement an 27 v. 3
- 38.: Anschlagblech
- 39.: Gewindebohrungen

## Patentansprüche

1. Auflageträger, der ein Basisteil (2) aufweist, das mit einer Auflageseite (4) auf eine Ladefläche eines Transportfahrzeuges auflegbar ist,
**dadurch gekennzeichnet, dass**
dem Basisteil (2) zumindest ein Trägerelement (3) zugeordnet ist, das in Längsrichtung (X-X) des Basisteils (2) relativ zu diesem aus einer Ruheposition in eine Gebrauchsposition bewegbar und zumindest in der Gebrauchsposition festlegbar ist.

2. Auflageträger nach Anspruch 2,
**dadurch gekennzeichnet, dass**
das zumindest eine Trägerelement (3) in dem Basisteil (2) aufgenommen ist, so dass ein teleskopartiger Auflageträger (1) gebildet ist.

3. Auflageträger nach Anspruch 1 oder 2,
**dadurch gekennzeichnet, dass**
dem Basisteil (2) zwei gleich dimensionierte Trägerelemente (3) zugeordnet sind, wobei die beiden Trägerelemente(3), bezogen auf das Basisteil (2), relativ zu diesem in jeweils entgegen gesetzter Richtung bewegbar sind.

4. Auflageträger nach einem der vorhergehenden Ansprüche,
**dadurch gekennzeichnet, dass**
das Trägerelement (3) kraftschlüssig an dem Basisteil (2) festlegbar ist.

5. Auflageträger nach einem der vorhergehenden Ansprüche,
**dadurch gekennzeichnet, dass**
das Basisteil (2) als hohles Vierkantrohr ausgeführt ist.

6. Auflageträger nach einem der vorhergehenden Ansprüche,
**dadurch gekennzeichnet, dass**
das Basisteil (2) jeweils endseitig Anschlagvorrichtungen (6) aufweist, die jeweils an gegenüberliegenden Seitenwänden (7) angeordnet sind, wobei die Anschlagvorrichtungen (6) in der Nähe der Auflageseite (4) angeordnet sind.

7. Auflageträger nach Anspruch 6,
**dadurch gekennzeichnet, dass**
die Anschlagvorrichtungen (6) aus einem Rundstahl gebildet sind und einen ersten gebogenen Abschnitt (8) aufweisen, der in einen im wesentlichen geradlinig verlaufenden zweiten Abschnitt (9) übergeht, wobei sich der gebogene Abschnitt (8) von der Seitenwand (7) weg erstreckt, und wobei der geradlinig verlaufende Abschnitt (9) mit seinem freien Ende (11) zur Seitenwand (7) hin orientiert ist.

8. Auflageträger nach einem der vorhergehenden Ansprüche,
**dadurch gekennzeichnet, dass**
das Basisteil (2) an seiner zur Auflageseite (4) gegenüberliegenden Trägerseite (13) jeweils endseitig eine erste Ausnehmung (14) aufweist, zu der in Längsrichtung (X-X) gesehen eine zweite Ausnehmung (16) beanstandet angeordnet ist.

9. Auflagevorrichtung nach Anspruch 8,
**dadurch gekennzeichnet,**
**dass** dem Basisteil (2) in seinem Inneren im Bereich der ersten Ausnehmung (14) ein Gleitelement (18) zugeordnet ist, welches an der Auflageseite (4) angeordnet ist, wobei in Längsrichtung (X-X) gesehen zueinander beabstandete Entwässerungsbohrungen (19) vorgesehen sind.

10. Auflageträger nach einem der vorhergehenden Ansprüche,
**dadurch gekennzeichnet, dass**
das Basisteil (2) jeweils endseitig in seinen Seitenwänden (7) zumindest zwei Bohrungen (21) aufweist.

11. Auflageträger nach Anspruch 10,
**dadurch gekennzeichnet, dass**
die Bohrungen (21) in den jeweiligen Seitenwänden (7) in Hochrichtung gesehen zueinander beanstandet und übereinander angeordnet sind.

12. Auflageträger nach einem der vorhergehenden Ansprüche,
**dadurch gekennzeichnet, dass**
das Trägerelement (3) als hohles Vierkantrohr mit einander gegenüberliegendes Querwänden (23) und Längswänden (24) ausgeführt ist, wobei in den Querwänden (23) zwei vertikal zueinander beabstandete Reihen mit Bohrungen (26) eingebracht sind, wobei die Bohrungen (26) der jeweiligen Reihe zur anderen Reihe in Längsrichtung (X-X) gesehen versetzt sind.

13. Auflagevorrichtung nach einem der vorhergehenden Ansprüche,
**dadurch gekennzeichnet, dass**
das Trägerelement (3) ein freies Ende (27) und ein dazu gegenüberliegendes Kopfende (28) aufweist, wobei an dem Kopfende (28) ein Kopfteil (29) angeordnet ist.

14. Auflageträger nach Anspruch 13,
**dadurch gekennzeichnet, dass**
das Kopfteil (29) aus einem U-förmigen Element mit zwei U-Schenkeln (31) und einem Basisschenkel (32) gebildet ist, wobei jeweils an Außenseiten der U-Schenkel (31) und an der Innenseite des Basisschenkels (32) ein Zugelement (33) angeordnet ist, wobei eine zur Innenseite des Basisschenkels (32) gegenüberliegende Außenseite mit dem Kopfende (28) verbunden ist, und wobei die Zugelemente (33) bewegbar gelagert sind.

15. Auflagevorrichtung nach einem der vorhergehenden Ansprüche,
**dadurch gekennzeichnet, dass**
das Trägerelement (3) an seinem Kopfende (28) ein Erhebungselement (17) aufweist, das an einer seiner Längswände (24) angeordnet ist.

16. Auflageträger nach einem der vorhergehenden Ansprüche,
**dadurch gekennzeichnet, dass**
das Trägerelement (3) an seinem freien Ende (27) zwei übereinander liegende Bohrungen (36) aufweist, die in seinen Querwänden (23) angeordnet sind, und dass das Trägerelement (3) an seinem freien Ende (27) ein Anschlagblech (38) aufweist, das am Äußeren des Trägerelements (3) an einer seiner Längswände (24) angeordnet ist.
